# EUROPEAN PATENT APPLICATION

(11) **EP 2 285 027 A1**
(43) Date of publication of application: **16.02.2011**
(21) Application number: 09305665.3
(22) Date of filing: 09.07.2009
(51) Int. Cl.: H04J 3/06, H04J 3/16

(54) **Synchronization method of multiple access points in wireless network**

(71) Applicant: Thomson Licensing, 92130 Issy-les-Moulineaux (FR)
(72) Inventor: Zhang, Zhi Gang, 92648, Boulogne cedex (FR); Zhong, Yang, 92648, Boulogne cedex (FR); Cheng, Lin Xiang, 92648, Boulogne cedex (FR)
(74) Representative: Berthier, Karine

(57) **Abstract**

A method for synchronizing the multiple adjacent access points of the above-described ADoC network is proposed to set one of these three access points as master and others as slaves. A master access point will send out beacon frames via the wireless interface periodically. And a slave access point will periodically tune to the channel of the master and receive a beacon frame sent by the master to synchronize its clock with the master. Upon detection of no master exists in the network, the slave access point may make itself as a master. (Fig.4)

## Description

### FIELD OF THE INVENTION

The present invention relates generally to the field of communication, and more particularly, to a synchronization method of multiple access points in wireless network.

### BACKGROUND OF THE INVENTION

Communication systems are known to support wireless or wired communication. A wireless LAN (Local Area Network) is such a network system that a part of the wire LAN is constructed by the wireless system, in which wireless stations can be bridged to the backbone network via an access point.

Normally, multiple access points will be deployed in the wireless LAN to increase the total throughput of network. These access points should be synchronized to transmit and receive data packets simultaneously.

### SUMMARY OF THE INVENTION

According to one aspect of the invention, a synchronization method of multiple access points in wireless network is provided. The access points operates on respective channels with a master-slave mode in which one access point is set as a master, the time of which is the reference for the other access points to synchronize their transmissions as slaves. The synchronization method comprises that the synchronization of the multiple access points is implemented via a wireless interface.

In the above respect, the master access point transmits at a first predetermined time interval, over a channel on which it operates, a master beacon containing time information as a reference for the transmissions of slave access points.

In the above respect, a slave access point periodically tunes to the channel of the master access point and staying at the channel for a second predetermined time interval to receive the master beacon transmitted by the master access point.

In the above respect, the second predetermined time interval is larger than two times of the first predetermined time interval so that the salve access point can receive at least one master beacon.

In the above respect, upon receipt of the master beacon transmitted by the master access point, the slave access point goes back to its own channel and synchronizes its transmission time with the time information contained in the master beacon.

In the above respect, if no master beacon is received by the slave access point within a third predetermined time interval, the slave access point determines whether to operate as a master as a function of the result of scanning all channels of the other slave access points.

In the above respect, the slave access point goes back to its own channel and operates as a master upon detection of a master access point during the scanning.

In the above respect, the slave access point goes back to its own channel and keeps to operate as a slave if no master access point is detected by the scanning.

In the above respect, the third predetermined time interval is equal to an integral times of the sum of the first and the second predetermined time intervals.

### BRIEF DESCRIPTION OF DRAWINGS

These and other aspects, features and advantages of the present invention will become apparent from the following description in connection with the accompanying drawings in which:
Figure 1 is an exemplary diagram showing an infrastructure of an ADoC system for access to the internet through an existing cable TV cable network;
Figure 2 shows a system infrastructure of a coaxial cable network;
Figure 3 is a flow chart showing a channel scanning process of an access point after startup;
Figure 4 is an exemplary diagram showing the solution for decreasing or eliminating the synchronization delay of a slave access point.

### DETAIL DESCRIPTION OF PREFERRED EMBODIMENTS

In the following description, various aspects of an embodiment of the present invention will be described. For purposes of explanation, specific configurations and details are set forth in order to provide a thorough understanding. However, it will also be apparent to one skilled in the art that the present invention may be practiced without the specific details present herein.

To provide a cost-effective bi-directional data transmission solution over the existing coaxial cable access network, a method has been proposed, which utilizes mature commodity WiFi chipsets with external frequency conversion circuit for frames delivery. The system which employs this method is referred to as ADoC (Asymmetric Data over Coaxial Cable) system, in which ADoC access point and stations can access the coaxial cable medium in a time-sharing mode (we call this case a TDF (Time Division Function) protocol) or a contention-based mode. In this way, the user at home can access the remote IP core network via the cable access network.

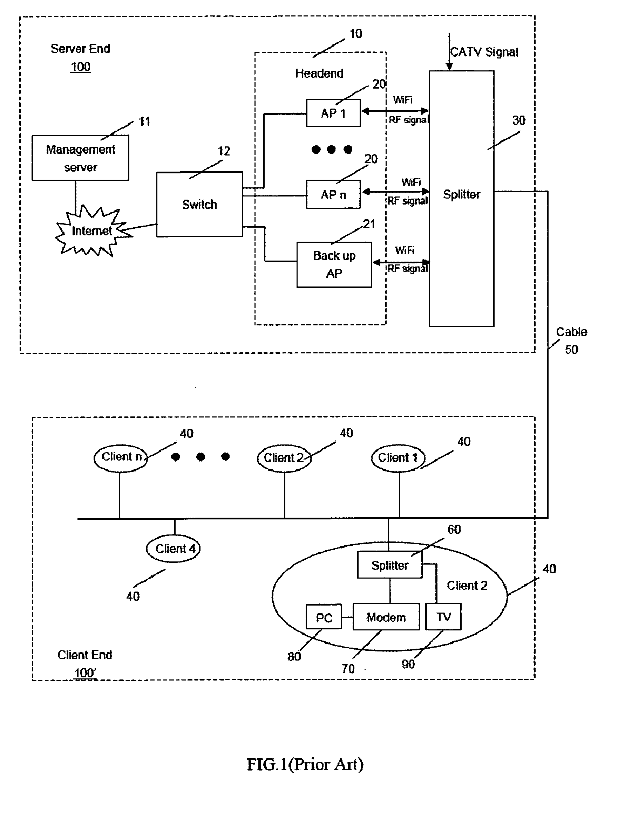

Figure 1 is an exemplary diagram showing an infrastructure of ADoC system for access to the internet through an existing cable TV cable network. Here the internet is used in a broad sense and refers to the wide area network, which could be the internet or the operator's network with walled garden applications. At the server end of the system as shown by sign 100, during the downlink transmission (from the server end 100 to the client end 100'), a headend apparatus 10 is provided between the internet and the cable TV network. Said headend apparatus 10 comprises multiple access points 20 (AP1...APn). The access points 20 are used to transform the Ethernet network signal received via a switch 12 into RF signal. The RF signals from the multiple access points 20 are combined together with cable TV signal by a splitter 30. Here the splitter 30 represents a set of power splitters and band splitters. The splitter 30 is connected to a cable 50. The access points 20 in the embodiment provide a data switching function over the DataLink Layer of the OSI (Open System Interconnect) Reference Model. As shown in Figure 1, each client 40, for example client 2, at the remote client end 100' of the cable TV network, is provided with a splitter 60 for separating RF signal from the analog video signal of cable TV, and transmitting relevant signals to modem 70 and the TV receiver 90 at client 2 respectively. Here, the splitter 60 can be implemented using power splitters and/or band pass filters. Finally, the data signal is demodulated by the modem 70 and sent to a PC 80 at client 2.

As shown in Figure 1, normally the ADoC system needs to deploy multiple access points to increase the total throughput. All adjacent access points in the ADoC system should be synchronized in order to avoid the RX (receiver) signal of one access point from being submerged by the TX (transmitter) signal of adjacent ones and also to improve the RX sensitivity of the access point. Otherwise, the packet loss will greatly increase, and the QoS and the throughput of the network will be deteriorated.

In view of the above problem, according to an embodiment of the present invention, a synchronization method of multiple access points in ADoC system is provided to synchronize multiple ADoC access points to transmit and receive data packets simultaneously.

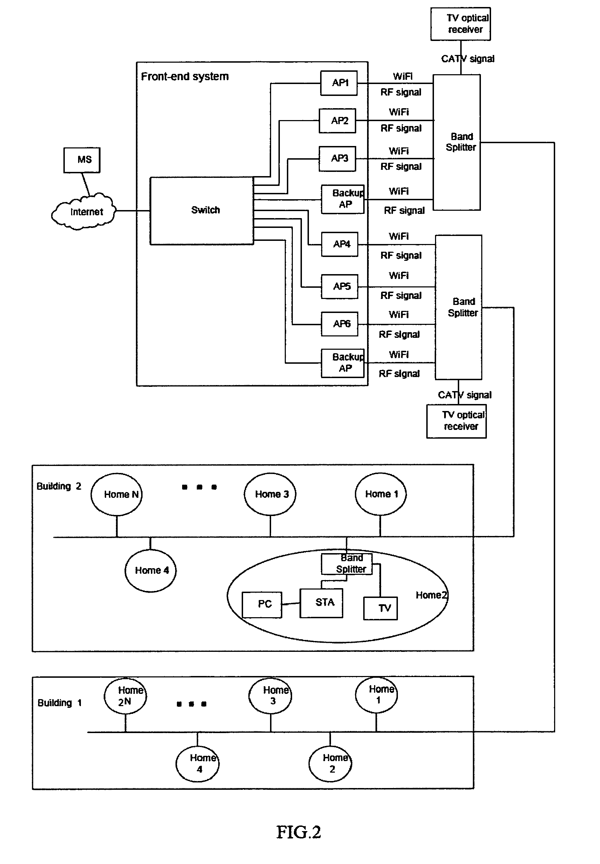

As mentioned above, the ADoC system generally uses IEEE 802.11b/g specification compliant WiFi chipsets with down-converted frequency band. A practical deployment for adjacent ADoC access points typically only uses three non-overlapping independent channels (for example channels 1, 6, and 11). Figure 2 is a diagram showing the structure of a coaxial cable network. It can be seen that Figure 2 is an exemplary implementation of the infrastructure of Figure 1, in which multiple access points are used for two buildings (client ends). As shown in Figure 2, three access points AP1, AP2 and AP3 are for a building B1 and three other access points AP4, AP5 and AP6 are for a building B2. Each building is also provided with a backup access point, which is similar to the case shown in Figure 1.

According to an embodiment of the invention, a method for synchronizing the multiple adjacent access points of the above-described ADoC network is proposed to set one of these three access points as master and others as slaves. A master access point will send out beacon frames via the wireless interface periodically. And a slave access point will periodically tune to the channel of the master and receive a beacon frame sent by the master to synchronize its clock with the master. Upon detection of no master exists in the network, the slave access point may make itself as a master. Next, an adjacent access point discovery process, a master/slave mode determination process, a beacon and TSF synchronization process, and a mode conversion process according to the method of the embodiment will be described in detail.

### 1. Adjacent access point discovery

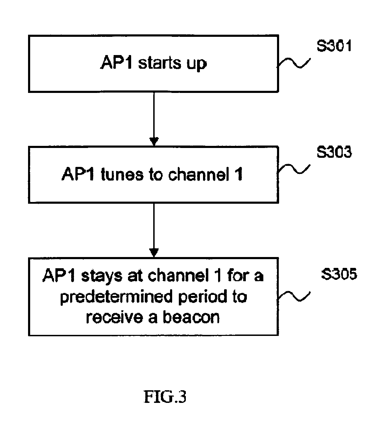

Figure 3 is a flow chart showing an adjacent access point discovery process. In this process, each access point in the ADoC system, after its startup, will scan all the independent channels of the ADoC system to discover any other ADoC access points on these channels.

Once an ADoC access point, for example AP1 of Figure 2 in this case, starts up in step S301, it will tune to the three non-overlapping independent channels of ADoC system (channels 1, 6, and 11) one after another. As shown in step S303 of Figure 3, the access point AP1 firstly tunes to channel 1. Then in the step S305, ADoC access point AP1 will stay at this channel for a period to receive beacon frames broadcasted from other access points by acting as a station. This staying period is predefined to ensure that the access point will be able to receive at least one beacon frame from another access point in this channel even when there are frame losses in the ADoC system. For example, 50TU (1TU=1.024ms, so 50TU=51.2ms) can be used for ADoC system, during which period the IEEE 802.11 series specification compliant access point can send 50 beacon frames and the above mentioned TDF compliant access point will send 2 beacon (synchronization) frames. Normally the above period is sufficient for the access point to receive at least one beacon frame.

The beacon frame of an access point includes a SSID (Service Set Identifier) that identifies whether the access point is an ADoC one or not and what kind of function (master or slave) the access point performs. A specific set of SSIDs is designed in this embodiment to identify an ADoC access point as a master ADoC access point or a slave ADoC access point, in which an "ADoC_master" SSID indicates a master and an "ADoC_slave1" SSID, an "ADoC-slave2" SSID indicate a first and a second slaves respectively.

Next, the access point AP1 tunes to another channel, for example channel 6 in this example, and repeats the above described process for channel 6.

It can be appreciated by a person skilled in the art that, by repeating the above process for each channel, all the access points in the ADoC system can scan all the independent channels to discover the adjacent access points

### 2. Master/Slave mode determination

Next, the ADoC access point determines its operation mode to operate as a master or a slave according to the result of the channel scanning.

If the access point AP1 does not receive any beacon frames during the scanning to these independent channels 1, 6, and 11, or receives beacon frames in these independent channels but no beacon frames found to have SSID of one of "ADoC_master", "ADoC_slave1" and "ADoC_slave2", it will choose any one of these independent channels, for example channel 1 in this embodiment, to operate and configures its SSID as "ADoC_master". In the latter case, those beacon frames received by the access point AP1 are believed to be sent by other access points from the air and their interferences to ADoC system in cable environment can be neglected.

If during the scanning the access point AP1 receives beacon frames with SSID of one of "ADoC_master", "ADoC_slave1" or "ADoC_slave2" in one or two of the three independent channels (that is, one or two channels have already been occupied by other ADoC access points), it will choose to operate in one of free channels. For example, if access point AP1 finds channels 1 and 6 are occupied by another access points AP2 and AP3 respectively, it will choose channel 11.

In the above case, if there is no beacon frame with SSID of "ADoC_master" received by access point AP1 during the scanning of channels 1 and 6, the access point AP1 will configure its SSID as "ADoC_master". Otherwise, the access point will configure its SSID as "ADoC_slave1" " when there is no beacon frame with SSI D of "ADoC_slave1, or configure its SSID as "ADoC_slave2" when there is no beacon frame with SSID of "ADoC_slave1".

If the access point AP1 receives beacon frames, with SSID as "ADoC_master" or "ADoC_slave1" or "ADoC_slave2" in all three independent channels, it will quit the ADoC operation mode and notify the system controller that no free channel resource is available.

### 3. Beacon and TSF synchronization

The SSID "ADoC_master" indicates an access point operates in a master mode among the multiple access points. In this embodiment, if the access point AP1 has the SSID of "ADoC_master", it will transmit beacon frames and set TSF timer in the normal way in accordance with IEEE 802.11 standard. The beacon transmission time and TSF timer of the master access point will be the reference for those of the whole ADoC system.

The SSID of "ADoC_slave1" or "ADoC_slave2" indicates an access point operates in a slave mode among the multiple access points. In this embodiment, if the access points AP2 and AP3 have the SSID of "ADoC_slave1" or "ADoC_slave2" respectively, they will periodically tune to the channel of the master access point AP1 and synchronize their beacon transmissions and TSF timers with the master AP1 by updating their TSF timers and beacon frame transmissions according to the following procedure:
a. The slave access point will tune to the channel of the master access point and try to receive a beacon frame from the master access point by acting as a station. Similar to the adjacent access point discovery step described above, the slave access point AP2 or AP3 will stay at the channel of the master access point AP1 for a period to receive beacon frames sent out by the master by acting as a station. This staying period is predefined to ensure that the access point will be able to receive at least one beacon frame on this channel. As an example, the staying period can be set to an integral times ( ≥2 ) of the beacon period, during which the master can send out at least one beacon frame for the slaves to receive.
b. Upon receipt of a beacon frame from the master access point, the slave access point will jump back to its own channel and send out its own beacon frame after the ADoC system's beacon period time unit (the time interval between two consecutive beacon frames sent by the master) which may be indicated by the beacon interval field in the beacon frame from the master access point. If its beacon transmission interval is different from the beacon period of the master access point, the slave access point will adjust its own beacon transmission interval to be the same as that of the master access point. Furthermore, if its TSF timer is different from the timestamp indicated in the received beacon frame from the master access point, the slave access point will set its local timer to the received timestamp value.

Synchronization of the beacon transmission of multiple access points can be implemented by an interrupt scheme, in which the master access point will generate an interrupt signal and a slave access point receiving the interrupt signal will respond to it to make the time be synchronized. In this case, the slave access points will complete the interrupt context before servicing this synchronization interrupt and then adjust their beacon transmission in an interrupt response function. In this case, since the slave access points have a delay in response, there will be a synchronization delay at the salve access point side. In view of the above problem, according to an embodiment of the present invention, the master access point may generate the interrupt signal a certain time in advance prior to sending out the beacon frame.

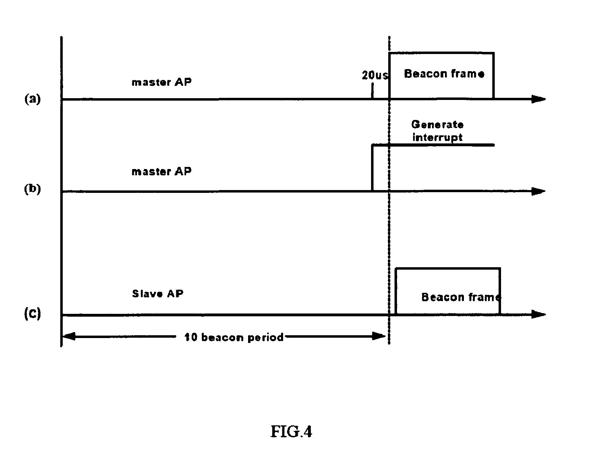

Figure 4 is an exemplary diagram showing the solution for decreasing or eliminating the synchronization delay in ADoC system. As shown in Figure 4 (a) and (b), the period for synchronization is assumed to be 10 beacon periods and the compensation for synchronization delay of the slave access point is assumed to be 20us. The master access point will generate the interrupt signal 20us in advance, as shown in Figure 4(b). In this way, as shown in Figure 4(c), the slave access point will send out its beacon frame nearly in synchronization with the transmission of the beacon frame of the master access point. It should be noted that the above value of 20us for the compensation of synchronization delay is only an example and appropriate value can be selected by testing or theoretical derivation depending on the network applied.

### 4. Mode conversion of slave access point

The slave ADoC access point will periodically tune to the channel of the master access point to receive the beacon frame from the master access point. Upon receipt of the beacon frame from the master access point, the slave access point will adjust its beacon transmission and TSF timer accordingly, as described above. In accordance with this procedure, the slave access point is able to be always synchronized with the master access point, even though when there is a time drift between the timer on the master and slave access points.

If the slave access point does not receive any beacon frame from the master access point for a certain period, for example after three consecutive times of the process described above, it will tune to another independent channel in ADoC system that is different from the channel of the master access point and its own channel. Then the slave access point will check whether it can receive a beacon frame with SSID of "ADoC_master" within a preset duration which can be chosen at random but between minimum times and maximum times of the beacon period and carry out the following procedure based on the result:
a. If a beacon frame with SSID of "ADoC_master" was received in the new channel, the slave access point will set the access point in the new channel as its new master access point and then adjust its beacon transmission and TSF timer with this new master AP accordingly.
b. If the slave access point does not receive in the new channel any beacon frame with SSID of "ADoC_master" for a certain time interval, for example after consecutive three times of the above described tuning process, it will determine that there is no master access point available in the ADoC system and then set itself as a master by changing its SSID to "ADoC_master". After that it does need to synchronize its beacon transmission and TSF with other access points, but transmits beacon frames and set TSF timer in the normal way, compliant with IEEE802.11 standard. Its beacon transmission time and TSF timer will be the reference for beacon transmission time and TSF timer of the whole ADoC system.

According to the described embodiment, beacon frames of all the three adjacent ADoC access points for Building 1 can be synchronized. The TSF timer for all these access points and their stations in the ADoC system will also be synchronized. Therefore, a good timing reference is provided for the MAC layer protocol of ADoC system to synchronize frame transmitting and receiving of all the access points respectively.

An embodiment of an ADoC network with three adjacent access points is described hereinabove to explain the principles of the invention, which are obvious to be applicable to an ADoC network with more access points.

While the embodiments are presented in the context of the ADoC network system, those skilled in the art will recognize that the principles of the invention are applicable to other wireless communication systems. It is to be understood that numerous modifications may be made to the illustrative embodiments and that other arrangements may be devised without departing from the spirit and scope of the present invention as defined by the appended claims.

## Claims

1. A synchronization method of multiple access points in wireless network, the access points operating on respective channels with a master-slave mode in which one access point is set as a master, the time of which is the reference for the other access points to synchronize their transmissions as slaves,
**characterized in that,**
the synchronization of the multiple access points is implemented via a wireless interface.

2. The synchronization method according to claim 1, wherein
the master access point transmits at a first predetermined time interval, over a channel on which it operates, a message containing time information as a reference for the transmissions of slave access points.

3. The synchronization method according to claim 2, wherein the message is carried by a master beacon.

4. The synchronization method according to claim 3, wherein
a slave access point periodically tunes to the channel of the master access point and staying at the channel for a second predetermined time interval to receive the master beacon transmitted by the master access point.

5. The synchronization method according to claim 4, wherein
the second predetermined time interval is larger than two times of the first predetermined time interval so that the salve access point can receive at least one master beacon.

6. The synchronization method according to claim 4, wherein
upon receipt of the master beacon transmitted by the master access point, the slave access point goes back to its own channel and synchronize its transmission time with the time information contained in the master beacon.

7. The synchronization method according to claim 4, wherein if no master beacon is received by the slave access point within a third predetermined time interval, the slave access point determines whether to operate as a master as a function of the result of scanning all channels of the other slave access points.

8. The synchronization method according to claim 7, wherein the slave access point goes back to its own channel and operates as a master upon detection of a master access point during the scanning.

9. The synchronization method according to claim 7, wherein the slave access point goes back to its own channel and keeps to operate as a slave if no master access point is detected by the scanning.

10. The synchronization method according to claim 7, wherein the third predetermined time interval is equal to an integral times of the sum of the first and the second predetermined time intervals.
